# EUROPEAN PATENT APPLICATION

(11) **EP 4 169 626 A1**
(43) Date of publication of application: **26.04.2023**
(21) Application number: 21829277.9
(22) Date of filing: 18.06.2021
(51) Int. Cl.: B05D 1/36, B05D 7/24, B32B 27/30, C09D 5/03, C08K 5/00, C08L 27/18, C08L 101/00, C09D 127/18, C09D 127/20, B32B 15/082, B32B 15/18, C09D 7/63, C09D 7/65

(54) **POWDER COATING MATERIAL COMPOSITION AND LAMINATED BODY**

(30) Priority: 22.06.2020 JP 2020106884
(71) Applicant: AGC Inc., Chiyoda-ku Tokyo 100-8405 (JP)
(72) Inventor: WADA, Shinji, Tokyo 100-8405 (JP); OZAWA, Norio, Tokyo 100-8405 (JP); SUSA, Hitoshi, Tokyo 100-8405 (JP)
(74) Representative: Müller-Boré & Partner Patentanwälte PartG mbB
(86) International application number: PCT/JP2021/023212
(87) International publication number: WO 2021/261401

(57) **Abstract**

To provide a powder coating material composition capable of forming a fluororesin layer excellent in adhesion to a base material and having foaming or cracking suppressed even when the firing temperature is as high as at least 380°C.

A powder coating material composition comprising a resin powder with an average particle size of from 10 to 800 µm containing polymer A and heat stabilizer B, wherein the proportion of the heat stabilizer B to 100 parts by mass of the polymer A is from 0.01 to 30 parts by mass. Polymer A: A tetrafluoroethylene/perfluoro (alkyl vinyl ether) copolymer having at least one type of functional group selected from the group consisting of a carbonyl group-containing group, etc., or a tetrafluoroethylene/ hexafluoropropylene copolymer, having the functional group, and having a melting point of from 260 to 320°C. Heat stabilizer B: A heat stabilizer selected from the group consisting of an aromatic polyether compound, an aromatic amine compound, an aromatic sulfur compound and a polysilane compound.

## Description

### TECHNICAL FIELD

The present invention relates to a powder coating material composition and a laminate.

### BACKGROUND ART

Fluorinated polymers such as tetrafluoroethylene/perfluoro(alkyl vinyl ether) copolymer (PFA) and tetrafluoroethylene/hexafluoropropylene (FEP) are widely used for surface processing of food industry articles, kitchen utensils such as frying pans and pots, household articles such as irons, electrical industry articles, machinery industry articles, etc., because of their low friction coefficient and excellent properties such as non-adhesiveness, chemical resistance and heat resistance.

As a surface processing method, for example, a method is known wherein a powder coating material containing a fluorinated polymer is applied to the surface of a base material such as a frying pan, and then fired to form a fluororesin layer to obtain a laminate.

PFA or FEP generally has poor adhesion to a base material. Therefore, for the purpose of improving adhesion to the base material, specific functional groups such as carbonyl group-containing groups may be introduced into PFA or FEP. However, when PFA or FEP has specific functional groups, foaming or cracking is likely to occur in the fluororesin layer at the time of firing. Therefore, for the purpose of suppressing foaming or cracking, it has been proposed to set the firing temperature to be at least 350°C and less than 380°C and the total time at the firing temperature to be at most 60 minutes (Patent Document 1).

By the way, a powder coating material containing a PFA or FEP powder and a specific heat stabilizer powder has been proposed as a powder coating material capable of inhibiting heat degradation without coloring the film (Patent Document 2).

As ethylene/tetrafluoroethylene copolymer (ETFE) powder with excellent adhesive properties, ETFE powder having a monomer having an acid anhydride residue and a polymerizable unsaturated bond copolymerized, and a powder composition containing such ETFE powder and a heat stabilizer, have been proposed (Patent Document 3).

### PRIOR ART DOCUMENTS

### PATENT DOCUMENTS

Patent Document 1: WO2018/070437
Patent Document 2: JP-A-2014-198772
Patent Document 3: JP-A-2006-206637

### DISCLOSURE OF INVENTION

### TECHNICAL PROBLEM

In the method described in Patent Document 1, the firing temperature is required to be set to be less than 380°C in order to suppress foaming or cracking.

The powder coating material in Patent Document 2 is inadequate in the adhesion of the fluororesin layer to the base material.

Since the powder composition in Patent Document 3 uses ETFE, the heat resistance of the fluororesin layer is inadequate. In addition, as a result of a study by the present inventors, it has been found that the heat stabilizer used in Patent Document 3 is inadequate in the effect of suppressing foaming, whereby the surface smoothness of the fluororesin layer is inadequate.

The present invention provides a powder coating material composition capable of forming a fluororesin layer excellent in adhesion to a base material and having foaming and cracking suppressed even in a case where the firing temperature is at a high temperature at a level of at least 380°C, and a laminate provided with a fluororesin layer excellent in adhesion to the base material.

### SOLUTION TO PROBLEM

The present invention has the following embodiments.
[1] A powder coating material composition comprising a resin powder with an average particle size of from 10 to 800 µm containing the following polymer A, and the following heat stabilizer B, wherein the proportion of the heat stabilizer B to 100 parts by mass of the polymer A is from 0.01 to 30 parts by mass,
   Polymer A: A fluorinated copolymer which is a tetrafluoroethylene/perfluoro(alkyl vinyl ether) copolymer having at least one type of functional group selected from the group consisting of a carbonyl group-containing group, a hydroxy group, an epoxy group and an isocyanate group, or a tetrafluoroethylene/hexafluoropropylene copolymer having the functional group, and which has a melting point of from 260 to 320°C,
   Heat stabilizer B: A heat stabilizer selected from the group consisting of an aromatic polyether compound, an aromatic amine compound, an aromatic sulfur compound and a polysilane compound.
[2] The powder coating material composition according to [1], wherein the total content of the polymer A and the heat stabilizer B is at least 90 mass% to the powder coating material composition.
[3] The powder coating material composition according to [1] or [2], wherein the polymer A is the fluorinated copolymer having a carbonyl group-containing group, and the heat stabilizer B is a heat stabilizer selected from the group consisting of an aromatic polyether compound, an aromatic amine compound and an aromatic sulfur compound.
[4] A method for producing a laminate comprising a base material and a fluororesin layer formed on the surface of the base material, which comprises forming a layer of the powder coating material composition as defined in any one of [1] to [3] on the surface of the base material, and then firing the layer of the powder coating material composition to form the fluororesin layer.
[5] The production method according to [4], wherein the temperature for the firing is from 330 to 400°C.
[6] The production method according to [4] or [5], wherein the thickness of the fluororesin layer formed on the surface of the base material is at least 5 µm.
[7] The production method according to any one of [4] to [6], wherein the material of the surface of the base material on which the fluororesin layer is formed is a metal.
[8] The production method according to [7], wherein the metal is stainless steel.
[9] The production method according to any one of [4] to [8], wherein a topcoat layer containing a fluorinated copolymer different from the polymer A is further formed on the surface of the fluororesin layer formed, to produce a laminate having a topcoat layer on the surface of the fluororesin layer.
[10] The production method according to [9], wherein the topcoat layer is formed by applying a powder coating material containing a tetrafluoroethylene/perfluoro(alkyl vinyl ether) copolymer not having the functional group or a tetrafluoroethylene/hexafluoropropylene copolymer not having the functional group to the surface of the fluororesin layer, followed by firing.
[11] A laminate comprising a base material and a fluororesin layer formed on the surface of the base material, wherein
   the fluororesin layer is a fluororesin layer formed from the powder coating material composition as defined in any one of [1] to [3],
   the thickness of the fluororesin layer is at least 5 µm, and
   the peel strength between the base material and the fluororesin layer is at least 20 N/cm.
[12] The laminate according to [11], which further has a topcoat layer formed on the fluororesin layer, wherein
   the topcoat layer contains a fluorinated copolymer different from the polymer A, and
   the total of the thickness of the fluororesin layer and the thickness of the topcoat layer is at least 10 µm.
[13] The laminate according to [12], wherein the fluorinated copolymer different from the polymer A is a tetrafluoroethylene/perfluoro(alkyl vinyl ether) copolymer not having the functional group, or a tetrafluoroethylene/hexafluoropropylene copolymer not having the functional group.
[14] The production method according to any one of [11] to [13], wherein the material of the surface of the base material in contact with the fluororesin layer is a metal.
[15] The laminate according to [14], wherein the metal is stainless steel.

### ADVANTAGEOUS EFFECTS OF INVENTION

According to the present invention, it is possible to provide a powder coating material composition capable of forming a fluororesin layer excellent in adhesion to the base material and having foaming or cracking suppressed even in a case where the firing temperature is at a high temperature at a level of at least 380°C, and a laminate provided with a fluororesin layer excellent in adhesion to the base material.

### DESCRIPTION OF EMBODIMENTS

Meanings of the following terms in this specification are as follows.

"Tetrafluoroethylene/perfluoro(alkyl vinyl ether) copolymer" means a copolymer having units (hereinafter referred to also as "TFE units") based on tetrafluoroethylene (hereinafter referred to also as "TFE") and units (hereinafter referred to also as "PAVE units") based on a perfluoro(alkyl vinyl ether) (hereinafter referred to also as "PAVE").

"Tetrafluoroethylene/perfluoro(alkyl vinyl ether) copolymer" means a copolymer having TFE units and units (hereinafter referred to also as "HFP units") based on hexafluoropropylene (hereinafter referred to also as "HFP").

The "average particle diameter of resin powder" is the cumulative 50% diameter (D50) on a volume basis, which is obtainable by a laser diffraction and scattering method. That is, the particle size distribution is measured by the laser diffraction and scattering method, and a cumulative curve is obtained with the total volume of the particle population as 100%, whereby the D50 is the particle diameter at the point on the cumulative curve where the cumulative volume is 50%.

A "unit" in a polymer means an atomic group derived from a single molecule of a monomer, which is formed by polymerization of the monomer. The unit may be an atomic group formed directly by the polymerization reaction, or it may be an atomic group having a part of the atomic group converted to another structure by processing the polymer obtained by the polymerization reaction.

The "melt flow rate" is the melt mass flow rate (MFR) specified in JIS K 7210:1999 (ISO 1133:1997).

A "(meth)acrylate" is a generic term for an acrylate and a methacrylate.

### [Powder coating material composition]

The first embodiment of the present invention is a powder coating material composition comprising a resin powder with an average particle diameter of from 10 to 800 µm containing polymer A, and heat stabilizer B.

Polymer A is a fluorinated polymer, which is a TFE/PAVE copolymer (hereinafter referred to also as "polymer A¹") having at least one type of functional group selected from the group consisting of a carbonyl group-containing group, a hydroxy group, an epoxy group and an isocyanate group, or a TFE/HFP copolymer (hereinafter referred to also as "polymer A²") having the functional group, and of which the melting point is from 260 to 320°C.

Further, hereinafter, a functional group selected from the group consisting of a hydroxy group, an epoxy group and an isocyanate group will be referred to also as a "functional group (i)".

Heat stabilizer B is a heat stabilizer selected from the group consisting of an aromatic polyether compound, an aromatic amine compound, an aromatic sulfur compound and a polysilane compound.

### (Resin powder)

Polymer A' has at least one type of functional group (i) and has TFE units and PAVE units.

Polymer A' may further have units based on monomers other than TFE and PAVE. The units based on monomers other than TFE and PAVE may include HFP units, units based on fluorinated monomers other than TFE, PAVE and HFP, and units based on monomers not having fluorine atoms. Polymer A' may have two or more types of units based on monomers other than TFE and PAVE.

Polymer A² has at least one type of functional group (i) and has TFE units and HFP units.

Polymer A² may further have units based on monomers other than TFE and HFP. Units based on monomers other than TFE and FEP include PAVE units, units based on fluorinated monomers other than TFE, PAVE and HFP, and units based on monomers not having fluorine atoms. Polymer A² may have two or more types of units based on monomers other than TFE and FEP.

In polymer A (polymer A' or polymer A²), the functional group (i) may be present in the units contained in polymer A or may be present in a terminal group present at the terminal of the main chain of polymer A.

The functional group (i) is preferably present in the units contained in polymer A. That is, it is preferred that polymer A has units having the functional group (i).

When the functional group (i) is present in the terminal group at the terminal of the main chain of polymer A, the terminal group having the functional group (i) is the terminal group derived from a polymerization initiator, a chain transfer agent or the like used in the production of polymer A. Polymer A may contain both units having the functional group (i) and terminal groups having the functional group (i).

Hereinafter, "units having the functional group (i)" is referred to also as "units (1)".

Polymer A contains TFE units and PAVE units or HFP units, and by having the content ratio of the two adjusted appropriately, it becomes easy to obtain a fluorinated polymer having a melting point of from 260 to 320°C.

Hereinafter, PAVE units and HFP units will be collectively referred to also as "units (3)".

As described below, the physical properties such as the melting point and melt flow rate (MFR) of polymer A are less likely to be affected by the presence or absence of units (1) or by the presence or absence of the functional group (i) in the terminal group, and are adjusted mainly by the relative proportions of TFE units and units (3) and by the molecular weight.

Polymer A may contain units other than units (1), TFE units and units (3).

Hereafter, units other than units (1), TFE units and units (3) will be referred to also as "units (4)".

Polymer A may be a copolymer containing TFE units and at least one type of units (3) and (4). As the copolymer containing TFE units and at least one type of units (3) and (4), a copolymer containing TFE units, units (3) and units (4), and a copolymer containing units (1), TFE units, units (3) and units (4) are preferred.

The functional group (i) is a functional group selected from the group consisting of a carbonyl group-containing group, a hydroxy group, an epoxy group and an isocyanate group, and polymer A may have two or more types of these functional groups. As the functional group (i), a carbonyl group-containing group is preferred.

The carbonyl group-containing group is not particularly restricted and may, for example, be a group having a carbonyl group between carbon atoms of a hydrocarbon group, a carbonate group, a carboxy group, a haloformyl group, an alkoxycarbonyl group, an acid anhydride residue group, a polyfluoroalkoxycarbonyl group or a fatty acid residue.

As the hydrocarbon group in a group having a carbonyl group between carbon atoms of the hydrocarbon group, for example, an alkylene group having from 2 to 8 carbon atoms may be mentioned. The number of carbon atoms in the alkylene group is the number of carbon atoms in the portion of the alkylene group other than the carbonyl group. The alkylene group may be linear or branched.

The haloformyl group is a group represented by -C(=O)-X (where X is a halogen atom). The halogen atom in the haloformyl group may be a fluorine atom, a chlorine atom, etc., and a fluorine atom is preferred. That is, as the haloformyl group, a fluoroformyl group (referred to also as a carbonyl fluoride group) is preferred.

The alkoxy group in an alkoxycarbonyl group may be linear or branched. As the alkoxy group, an alkoxy group having from 1 to 8 carbon atoms is preferred, and a methoxy or ethoxy group is particularly preferred.

Among carbonyl group-containing groups, from the viewpoint of improving adhesion to the base material, groups selected from the group consisting of a group having a carbonyl group between carbon atoms of a hydrocarbon group, a carbonate group, a carboxy group, a haloformyl group, an alkoxycarbonyl group and an acid anhydride residue, are preferred, and a carboxy group and an acid anhydride residue are more preferred.

As units (1), units based on a monomer having a functional group (i) (hereinafter referred to also as a "monomer (m1)") are preferred. The monomer (m1) may have two or more functional groups (i). When the monomer (m1) has two or more functional groups (i), they may be the same or different.

As the monomer (m1), a compound having one functional group (i) and one polymerizable double bond is preferred.

The monomer (m1) may be either a fluorinated monomer other than TFE, PAVE and HFP or a monomer having no fluorine atom, but it is preferably a monomer having no fluorine atom.

Among monomers (m1), as a monomer having a carbonyl group-containing group, for example, a cyclic hydrocarbon compound having an acid anhydride residue and a polymerizable unsaturated bond (hereinafter referred to also as a "monomer (m11)"), a monomer having a carboxy group (hereinafter referred to also as a "monomer (m12)"), a vinyl ester, a (meth)acrylate, CF₂=CFOR^{f1}COOX¹ (where R^{f1} is a perfluoroalkylene group having from 1 to 10 carbon atoms that may have an etheric oxygen atom, and X¹ is a hydrogen atom or an alkyl group having from 1 to 3 carbon atoms), etc. may be mentioned.

As the monomer (m11), for example, an acid anhydride of an unsaturated dicarboxylic acid may be mentioned. As the acid anhydride of an unsaturated dicarboxylic acid, for example, itaconic anhydride (hereinafter referred to also as "IAH") citraconic anhydride (hereinafter referred to also as "CAH"), 5-norbornene-2,3-dicarboxylic anhydride (another name: hymic anhydride, hereinafter referred to also as "NAH") or maleic anhydride may be mentioned.

As the monomer (m12), for example, an unsaturated dicarboxylic acid such as itaconic acid, citraconic acid, 5-norbornene-2,3-dicarboxylic acid, maleic acid, etc.; or an unsaturated monocarboxylic acid such as acrylic acid, methacrylic acid, etc. may be mentioned.

As the vinyl ester, for example, vinyl acetate, vinyl chloroacetate, vinyl butanoate, vinyl pivalate, vinyl benzoate, vinyl crotonate, etc. may be mentioned.

As the (meth)acrylate, for example, a (polyfluoroalkyl) acrylate, a (polyfluoroalkyl) methacrylate, etc. may be mentioned.

As the monomer having a hydroxy group, for example, a vinylester, a vinylether, an allyl ether, a compound being a (meth)acrylate compound having one or more hydroxy groups at the terminal or side chain, a crotonic acid modified compound such as hydroxyethyl crotonate, an allyl alcohol, etc. may be mentioned.

As the monomer having an epoxy group, for example, an unsaturated glycidyl ether (e.g. allyl glycidyl ether, 2-methylallyl glycidyl ether, vinyl glycidyl ether, etc.), an unsaturated glycidyl ester (e.g. glycidyl acrylate, glycidyl methacrylate, etc.), etc. may be mentioned.

As the monomer having an isocyanate group, for example, 2-(meth)acryloyloxyethyl isocyanate, 2-(2-(meth)acryloyloxyethoxy)ethyl isocyanate, 1,1-bis((meth)acryloyloxymethyl)ethyl isocyanate, etc. may be mentioned.

As the monomer (m1), two or more types may be used in combination.

Units (1) should preferably have at least a carbonyl group-containing group as the functional group (i) from the viewpoint of improving adhesion to the base material. As the monomer (m1), a monomer having a carbonyl group-containing group is preferred.

As the monomer having a carbonyl group-containing group, from the viewpoint of heat stability and improved adhesion to the base material, a monomer (m11) is preferred. Especially a monomer selected from the group consisting of IAH, CAH and NAH is particularly preferred. When at least one type selected from the group consisting of IAH, CAH and NAH is used, a fluorinated copolymer having an acid anhydride residue can be easily produced without using a special polymerization method (see JP-A-H11-193312) which is required when maleic anhydride is used. Among IAH, CAH and NAH, from the viewpoint that the adhesion to the base material is superior, NAH is preferred.

As PAVE, for example, CF₂=CFOR^{f2} (where R^{f2} is a perfluoroalkyl group having from 1 to 10 carbon atoms, which may have an etheric oxygen atom) may be mentioned. The perfluoroalkyl group in R^{f2} may be linear or branched. The number of carbon atoms in R^{f2} is preferably from 1 to 3.

As CF₂=CFOR^{f2}, CF₂=CFOCF₃, CF₂=CFOCF₂CF₃, CF₂=CFOCF₂CF₂CF₃ (hereinafter referred to also as "PPVE"), CF₂=CFOCF₂CF₂CF₂CF₃, CF₂=CFO(CF₂)₈F, etc. may be mentioned, and PPVE is preferred.

As PAVE, two or more types may be used in combination.

The monomer forming units (4) is a monomer other than the monomer (m1), TFE, PAVE and HFP.

As the monomer forming units (4), a fluorinated monomer other than the monomer (m1), TFE, PAVE and HFP (hereinafter referred to as a "monomer (m41)"), or a monomer having no fluorine atom other than the monomer (m1) (hereinafter referred to also as a "monomer (m42)") may be mentioned.

As the monomer (m41), a fluorinated compound having one polymerizable double bond is preferred, and, for example, vinyl fluoride, vinylidene fluoride (hereinafter referred to also as VdF"), a fluoroolefin (but excluding TFE and HFP) such as trifluoroethylene, chlorofluoroethylene (hereinafter referred to also as "CTFE"), etc., (CF₂=CFOR^{f3}SO₂X³ (where R^{f3} is a perfluoroalkylene group having from 1 to 10 carbon atoms or a perfluoroalkylene group having from 2 to 10 carbon atoms having an etheric oxygen atom, and X³ is a halogen atom or a hydroxy group), CF₂=CF(CF₂)ₚOCF=CF₂ (where p is 1 or 2), CH₂=CX⁴(CF₂)_{q}X⁵ (where X⁴ is a hydrogen or fluorine atom, q is an integer of from 2 to 10, and X⁵ is a hydrogen atom or a fluorine atom), a perfluoro(2-methylene-4-methyl-1 ,3-dioxolane), etc. may be mentioned. Two or more types of these may be used.

As the monomers (m41), a monomer selected from the group consisting of VdF, CTFE and CH₂=CX⁴(CF₂)_{q}X⁵ is preferred.

As CH₂=CX⁴(CF₂)_{q}X⁵, CH₂=CH(CF₂)₂F, CH₂=CH(CF₂)₃F, CH₂=CH(CF₂)₄F, CH₂=CF(CF₂)₃H, CH₂=CF(CF₂)₄H, etc. may be mentioned, and CH₂=CH(CF₂)₄F and CH₂=CH(CF₂)₂F are preferred.

As the monomer (m42), a compound having one polymerizable double bond and having no fluorine atom, is preferred, and, for example, an olefin having at most 3 carbon atoms, such as ethylene, propylene, etc., may be mentioned. Two or more types of these may be used.

As the monomer (m42), ethylene and propylene are preferred, and ethylene is particularly preferred.

As the monomer forming units (4), two or more types may be used in combination. In a case where two or more types are used in combination, two or more types of the monomer (m41) may be used in combination, or two or more types of the monomer (m42) may be used in combination, or one or more types of the monomer (m 41) and one or more types of the monomer (m42) may be used in combination.

As polymer A', a copolymer having units (1), TFE units and PAVE units is preferred, and a copolymer having units (1), TFE units and PAVE units, wherein to the total of all units, the proportion of units (1) is from 0.01 to 3 mol%, the proportion of TFE units is from 90 to 99.89 mol%, and the proportion of PAVE units is from 0.1 to 9.99 mol%, is more preferred.

Polymer A' may further contain at least one of HFP units and units (4), as the case requires. Polymer A' may be one comprising units (1), TFE units and PAVE units, or may be one comprising units (1), TFE units, PAVE units and HFP units, or may be one comprising units (1), TFE units, PAVE units and units (4), or may be one comprising units (1), TFE units, PAVE units, HFP units and units (4).

As polymer A', a copolymer having units based on a monomer having a carbonyl group-containing group, TFE units and PAVE units is preferred, and a copolymer having units based on the monomer (m11), TFE units and PAVE units is particularly preferred.

As specific examples of the preferred polymer A', a NAH/TFE/PPVE copolymer, a IAH/TFE/PPVE copolymer, and a CAH/TFE/PPVE copolymer may be mentioned.

Polymer A' may have a functional group (i) as the main chain terminal group. As the functional group (i) as the main chain terminal group, an alkoxycarbonyl group, a carbonate group, a carboxy group, a fluoroformyl group, an acid anhydride residue or a hydroxy group is preferred. Such a functional group may be introduced by suitably selecting the radical polymerization initiator, chain transfer agent, etc. to be used in the production of polymer A'.

With respect to the proportion of units (1), if it is at least the lower limit value of the above range, a resin powder with a large bulk density can easily be obtainable, and adhesion between the fluororesin layer and the base material (such as a metal) is excellent. If the proportion of units (1) is at most the upper limit value of the above range, the heat resistance and coloration of polymer A' are excellent.

The proportion of units (1) is more preferably from 0.03 to 2 mol%, particularly preferably from 0.05 to 1 mol%.

With respect to the proportion of TFE units, if it is at least the lower limit value of the above range, polymer A' is excellent in heat resistance, chemical resistance, etc. If the proportion of TFE units is at most the upper limit value of the above range, polymer A' is excellent in stress crack resistance.

The proportion of TFE units is more preferably from 95 to 99.47 mol%, particularly preferably from 96 to 98.95 mol%.

With respect to the proportion of PAVE units, if it is within the above range, polymer A' is excellent in moldability.

The proportion of PAVE units is more preferably from 0.5 to 9.97 mol%, particularly preferably from 1 to 9.95 mol%.

The proportion of the total of units (1), TFE units and PAVE units to the total of all units in polymer A' is preferably at least 90 mol%, more preferably at least 95 mol%, further preferably at least 98 mol%. The upper limit of the proportion is not particularly limited and may be 100 mol%.

The proportion of the respective units in polymer A' can be measured by NMR analysis such as melted nuclear magnetic resonance (NMR) analysis, fluorine content analysis, infrared absorption spectrum analysis, etc. For example, as described in JP-A-2007-314720, the proportion (mol%) of units (1) in all units constituting polymer A' may be obtained by using a method such as infrared absorption spectrum analysis.

As polymer A², a copolymer having units (1), TFE units and HFP units is preferred, and a copolymer having units (1), TFE units and HFP units, wherein to the total of all units, the proportion of units (1) is from 0.01 to 3 mol%, the proportion of TFE units is from 90 to 99.89 mol%, and the proportion of HFP units is from 0.1 to 9.99 mol% (but excluding polymer A'), is more preferred.

Polymer A² may further contain at least one of PAVE units and units (4), as the case requires. Polymer A² may be one comprising units (1), TFE units and HFP units, or may be one comprising units (1), TFE units, HFP units and PAVE units (but excluding polymer A'), or may be one comprising units (1), TFE units, HFP units and units (4), or may be one comprising units (1), TFE units, HFP units, PAVE units and units (4) (but excluding polymer A').

As polymer A², a copolymer having units based on a monomer having a carbonyl group-containing group, TFE units and HFP units is preferred, and a copolymer comprising units based on a monomer (m11), TFE units and HFP units is particularly preferred.

As specific examples of the preferred polymer A², a NAH/TFE/HFP copolymer, a IAH/TFE/HFP copolymer and a CAH/TFE/HFP copolymer may be mentioned.

Polymer A² may have a functional group (i) as the main chain terminal group. As the preferred functional group (i) as the main chain terminal group, the same as one mentioned for polymer A' may be mentioned.

With respect to the proportion of units (1), if it is at least the lower limit value of the above range, a resin powder with a large bulk density can be easily obtainable, and adhesion between the fluororesin layer and the base material (such as a metal) is excellent. If the proportion of units (1) is at most the upper limit of the above range, the heat resistance and coloration of polymer A² are excellent.

The proportion of units (1) is more preferably from 0.02 to 2 mol%, particularly preferably from 0.05 to 1.5 mol%.

With respect to the proportion of TFE units, if it is at least the lower limit value of the above range, polymer A² is excellent in heat resistance, chemical resistance, etc. If the proportion of TFE units is at most the upper limit value of the above range, polymer A² is excellent in stress crack resistance.

The proportion of TFE units is preferably from 91 to 98 mol%, particularly preferably from 92 to 96 mol%.

With respect to the proportion of HFP units, if it is within the above range, it is excellent in peel strength.

The proportion of HFP units is more preferably from 1 to 9 mol%, particularly preferably from 2 to 8 mol%.

The proportion of the total of units (1), TFE units and HFP units to the total of all units in polymer A² is preferably at least 90 mol%, more preferably at least 95 mol%, further preferably at least 98 mol%. The upper limit of the proportion is not particularly limited and may be 100 mol%.

The melting point of polymer A is from 260 to 320°C, preferably from 280 to 320°C, more preferably from 295 to 315°C, further preferably from 295 to 310°C. When the melting point of polymer A is at least the lower limit value of the above range, it is excellent in heat resistance. When the melting point of polymer A is at most the upper limit value of the above range, it is excellent in balance between heat resistance and processability.

The melting point of polymer A is measured by the method described in Examples given below.

Further, the melting point of polymer A can be adjusted by the types or content proportions of the units constituting the polymer A, the molecular weight, etc. For example, the higher the proportion of TFE units, the higher the melting point tends to be.

The melt flow rate (MFR) of polymer A is preferably from 0.1 to 1,000 g/10 min, more preferably from 0.5 to 100 g/10 min, further preferably from 1 to 50 g/10 min, particularly preferably from 5 to 40 g/10 min. When the MFR is at least the lower limit value of the above range, it is possible to form a layer excellent in processability and excellent in flatness. When the MFR is at most the upper limit value of the above range, polymer A is excellent in mechanical strength and the fluororesin layer is excellent in mechanical strength.

MFR is measured by the method described in Examples given below.

MFR is an index for the molecular weight of polymer A. The larger the MFR, the smaller the molecular weight and the smaller the MFR, the larger the molecular weight. The molecular weight of polymer A, and thus the MFR, can be adjusted by the production conditions of polymer A. For example, if the polymerization time is shortened at the time of polymerization of the monomer, the MFR tends to increase.

Polymer A can be produced by conventional methods. For example, as the method for producing polymer A, the methods (α) to (γ) described in [0053] to [0060] in WO2016/017801 may be mentioned.

The resin powder may contain a fluorinated polymer other than polymer A, an aromatic polyester, a polyamide-imide, a thermoplastic polyimide, etc., as the case requires, to the extent that the effect of the invention is not impaired.

The proportion of polymer A to the total amount of the resin powder is preferably at least 80 mass%, more preferably at least 85 mass%, further preferably at least 90 mass%, particularly preferably 100 mass%.

The average particle size of the resin powder is from 10 to 800 µm.

In a case where the coating method of the powder coating material composition is electrostatic coating, the average particle size of the resin powder is preferably from 10 to 500 µm, more preferably from 20 to 300 µm. When the average particle size of the resin powder is at least the lower limit value of the above range, air is less likely to be entrained during electrostatic coating, and if it is at most the upper limit value of the above range, the fluororesin layer can be made thinner.

In a case where the coating method of the powder coating material composition is fluid dipping or rotolining, the average particle size of the resin powder is preferably from 50 to 700 µm, more preferably from 100 to 500 µm.

The average particle size of the resin powder is measured by the method described in Examples given below.

### (Heat stabilizer B)

Heat stabilizer B is a heat stabilizer selected from the group consisting of an aromatic polyether compound, an aromatic amine compound, an aromatic sulfur compound and a polysilane compound.

As the aromatic polyether compound, for example, polyetheretherketone, polyetherketoneketone, polyethersulfone, or polyetherimide may be mentioned.

As the aromatic amine compound, for example, phenyl-α-naphthylamine, diphenyl-p-phenylenediamine, N,N'-di-2-naphthyl-p-phenylenediamine, benzotriazole, or 2-(2-hydroxy-5-tetraoctylphenyl) benzotriazole may be mentioned.

As the aromatic sulfur compound, for example, 2-mercapto-benzimidazole zinc salt, polyphenylene sulfide, 2-(N,N'-diethylthiocarbamoylthio)benzothiazole, or N,N'-dicyclohexyl-2-benzothiazolylsulfenamide may be mentioned.

As the polysilane compound, for example, decaphenylcyclopentasilane may be mentioned.

Among these, an aromatic amine compound and an aromatic sulfur compound are preferred because even when added in small amounts, they can suppress foaming without changing the performance of the coating film.

As heat stabilizer B, two or more types may be used in combination.

### (Other components)

The powder coating material composition may contain components other than the resin powder and heat stabilizer B, as the case requires, to the extent that the effect of the present invention is not impaired. As other components, a powder containing a polymer other than polymer A, a pigment, carbon fibers, graphite, a metal oxide, a metal halide, etc. may be mentioned. As the polymer other than polymer A, a fluorinated polymer other than polymer A, an aromatic polyester, a polyamide-imide, or a thermoplastic polyimide may be mentioned.

In the powder coating material composition, the proportion of heat stabilizer B to 100 mass parts of polymer A is from 0.01 to 30 parts by mass, preferably from 0.05 to 20 parts by mass, more preferably from 0.1 to 15 parts by mass. When the proportion of heat stabilizer B is at least the above lower limit value, it is possible to form a fluororesin layer excellent in adhesion to the base material and having foaming and cracking suppressed even when the firing temperature is as high as at least 380°C. When the proportion of heat stabilizer B is at most the above upper limit value, it is unlikely to affect the physical properties (chemical resistance, electrical properties, etc.) of polymer A.

The proportion of the total of the resin powder and heat stabilizer B to the total mass of the powder coating material composition is preferably at least 90 mass%, more preferably at least 95 mass%, and it may be 100 mass%.

The powder coating material composition may be produced, for example, by mixing the resin powder, a powder of heat stabilizer B and a powder of other components as the case requires by a dry system. To adjust the average particle size of the resin powder, after the mixing, a pulverization treatment may be applied to the obtained mixture, or a classification treatment may be applied.

By mixing by a dry system, heat is not exerted as compared to a case of mixing the resin powder and heat stabilizer B by melt kneading, whereby the stabilizer is less likely to react during the mixing, and during coating, heat stabilizer B fully exerts its effect such as suppression of foaming.

As the mixing method, for example, a method using a dry mixer such as a double cone blender, a V blender, an air blender, a gravity blender, a ribbon mixer, a screw mixer, a paddle mixer or a vibratory mixer, may be mentioned.

The temperature during mixing is, for example, from room temperature to 80°C.

In the above-described powder coating material composition, heat stabilizer B is combined with a resin powder containing polymer A, whereby foaming and cracking can be suppressed even when the firing temperature at the time of coating on the base material is as high as at least 380°C. In addition, the coating film (fluororesin layer) formed by the coating process has superior adhesion to the base material as compared to the case without heat stabilizer B.

The reason for the improvement in adhesion to the base material is not clear, but it is thought that heat stabilizer B acts catalytically to facilitate the formation of covalent bonds between the functional group (i) of polymer A and the hydroxy group on the surface of the base material such as stainless steel. It is also considered that heat stabilizer B intervenes between the functional group (i) and the hydroxy group on the surface of the base material to improve the ionic bonding strength.

### [Laminate and its production method]

The second embodiment of the present invention is a laminate comprising a base material and a fluororesin layer formed on the surface thereof from the powder coating material composition of the above-described first embodiment of the present invention (hereinafter referred to also as "the powder coating material composition of the present invention"), and a method for producing such a laminate, which comprises producing the laminate by using the powder coating material composition of the present invention.

That is, the laminate of the present invention comprises a base material and a fluororesin layer formed on the surface of the base material, wherein the fluororesin layer is a fluororesin layer formed from the powder coating material composition of the present invention, the thickness of the fluororesin layer is at least 5 µm, and the peel strength between the base material and the fluororesin layer is at least 20 N/cm.

Further, the method for producing the laminate of the present invention is a process for producing a laminate comprising a base material and a fluororesin layer formed on the surface of the base material, which comprises forming a layer of the powder coating material composition of the invention on the surface of the base material, and then firing the layer of the powder coating material composition to form the fluororesin layer.

### (Laminate)

The base material is not particularly limited, and may, for example, be a household item such as a frying pan, a pot, an iron, etc., or a factory piping.

The material for the base material is not particularly limited, and may be a metal such as stainless steel or iron, a resin, glass, ceramics, etc. The base material may consist of a combination of different materials.

As the base material, a base material in which at least the surface on which the fluororesin layer is formed is a metal is preferred. For example, a metallic base material or a laminated base material having a metallic layer on its surface, may be mentioned.

In general, it is difficult to secure adhesion between the base material and the fluororesin layer when the surface of the base material on which the fluororesin layer is formed is a metal. The laminate of the present invention is effective because it can secure adhesion between the base material and the fluororesin layer even in a case where the surface of the base material is a metal. In particular, in a case where the fluororesin layer is formed on the surface of a stainless steel base material in e.g. the above-mentioned household item, it is particularly effective because high adhesion between the stainless steel surface and the fluororesin layer can be secured.

The metallic base material may be a metallic foil or a bendable metallic base material thicker than the metallic foil, with a thickness of from about 0.3 to 0.5 mm. The metal in the metallic foil or metallic base material may be copper, iron, aluminum, stainless steel, etc., and copper is preferred.

The thickness of the fluororesin layer is at least 5 µm, and in a case where it does not have the after-described topcoat layer, it is preferably at least 10 µm.

In a case where the fluororesin layer is formed by electrostatic coating, the thickness of the fluororesin layer is preferably at least 50 µm, more preferably at least 100 µm, from the viewpoint of physical properties such as chemical resistance and electrical characteristics. The upper limit value of the thickness of the fluororesin layer is preferably 750 µm, more preferably 500 µm, from the viewpoint of process shortening.

In a case where the fluororesin layer is formed by rotolining, the thickness of the fluororesin layer is preferably at least 100 µm, more preferably at least 500 µm, particularly preferably at least 1,000 µm, from the viewpoint of physical properties such as chemical resistance and electrical characteristics. The upper limit value of the thickness of the fluororesin layer is preferably 20 mm, more preferably 10 mm, from the viewpoint of obtaining a good coating film without defects.

The peel strength between the base material and the fluororesin layer is at least 20 N/cm, more preferably at least 23 N/cm, particularly preferably at least 25 N/cm. When the peel strength between the base material and the fluororesin layer is at least the above lower limit value, the adhesion between the base material and the fluororesin layer is excellent, and the fluororesin layer is difficult to peel off.

The upper limit value of the peel strength between the base material and the fluororesin layer may be, for example, 100 N/cm, 90 N/cm, or 85 N/cm.

The peel strength between the base material and the fluororesin layer may be, for example, from 20 to 100 N/cm, from 23 to 90 N/cm, or from 25 to 85 N/cm.

### (Method for producing laminate)

The laminate may be produced by forming a layer of the powder coating material composition of the present invention on the surface of the base material, and then, firing the layer of the powder coating material composition of the present invention to form a fluororesin layer. As the method for forming the layer of the powder coating material composition of the present invention on the surface of the base material, the powder coating method is used.

As the method for forming the fluororesin layer, a method for forming a fluororesin layer by repeating an operation of powder-coating the powder coating material composition of the present invention on the base material, followed by firing it, one or more times, to form a fluororesin layer with a thickness of at least 5 µm on the surface of the base material. The powder coating method may be any conventionally known powder coating method, and, for example, an electrostatic coating method, a fluid dipping method, or rotolining may be applied.

As the method of forming a fluororesin layer, in particular, preferred is a method of repeating an operation of powder-coating the powder coating material composition of the present invention on a base material, followed by firing it, one or more times, to form a fluororesin layer with a thickness of at least 10 µm on the surface of the base material.

As the method for electrostatically coating the powder coating material composition, a known method may be employed.

In a case where the operation of the electrostatic coating and firing is repeated two or more times, the powder coating material composition in each operation may be the same or may be different within the scope of the first embodiment of the present invention. For example, a laminate may be produced by using two types of the powder coating material composition containing different polymers (e.g. polymer A' and polymer A² as described above), although both are polymer A.

As the firing method, a known method may be employed.

The firing temperature is preferably from 330 to 400°C, more preferably at least 350°C and less than 400°C, further preferably from 350 to 390°C, particularly preferably from 350 to 380°C. When the firing temperature is at least the above lower limit value, adhesion between the fluororesin layer formed and the base material is more excellent. When the firing temperature is at most the above upper limit value, it is possible to further suppress foaming and cracking in the fluororesin layer, and the surface smoothness of the fluororesin layer and the appearance of the laminate are more excellent.

The firing temperatures for the respective two or more firing may be different or may be the same.

In a case where in the electrostatic coating, firing is performed two or more times, the total time at the above firing temperatures (hereinafter referred to as "total firing time") is preferably at least 90 minutes, more preferably from 3 to 90 minutes, further preferably from 5 to 60 minutes. When the total firing time is at most the above upper limit value, it is possible to further suppress foaming and cracking in the fluororesin layer, and the surface smoothness of the fluororesin layer and the appearance of the laminate are more excellent. When the total firing time is at least the lower limit value of the above range, the adhesion between the fluororesin layer formed and the base material is more excellent.

The firing time for each firing in electrostatic coating is preferably from 1 to 20 minutes, more preferably from 1 to 15 minutes. When the firing time for each firing is at least the lower limit value of the above range, the resin is sufficiently melted, and the surface smoothness is excellent. When the firing time for each firing is at most the upper limit value of the above range, foaming and cracking tend to be suppressed. When the total firing time is at most the above upper limit value, it is possible to further suppress foaming and cracking in the fluororesin layer, and the surface smoothness of the fluororesin layer and the appearance of the laminate are more excellent. When the total firing time is at least the lower limit value of the above range, the adhesion between the fluororesin layer formed and the base material is more excellent.

The firing times for the respective two or more firing may be different or may be the same.

The number of repetitions of the operation of electrostatic coating and firing may be suitably set depending upon the thickness of the fluororesin layer to be formed, and from 2 to 15 times is preferred, and from 2 to 10 times is more preferred.

In rotolining, the time at the above firing temperature is preferably at most 120 minutes, more preferably from 3 to 90 minutes, further preferably from 5 to 60 minutes. When the firing time is at most the above upper limit value, it is possible to further suppress foaming and cracking in the fluororesin layer, and the surface smoothness of the fluororesin layer and the appearance of the laminate are more excellent. When the total firing time is at least the lower limit value of the above range, the adhesion between the fluororesin layer formed and the base material is more excellent.

The laminate of the present invention may be provided with a topcoat layer formed on the fluororesin layer. This topcoat layer is a topcoat layer containing a fluorinated copolymer different from the polymer A (hereinafter referred to also as "second fluorinated copolymer"), and the total of the thickness of the fluororesin layer and the thickness of the topcoat layer is at least 10 µm.

In the case of having a topcoat layer, the thickness of the fluororesin layer is preferably at least 10 µm, more preferably at least 30 µm.

As the second fluorinated copolymer, a TFE/PAVE copolymer having no functional group (i) (hereinafter referred to also as "polymer C¹") or a TFE/HFP copolymer having no functional group (i) (hereinafter referred to as "polymer C²") is preferred, and polymer C¹ is more preferred.

Polymer C¹ is preferably a fluorinated copolymer in the same category as polymer A' except that it has no functional group (i). The content proportions of the respective units such as TFE units and PAVE units in polymer C¹ are preferably the content proportions of the respective units in a case where the content proportion of units (1) is set to be 0 in polymer A'.

Polymer C² is preferably a fluorinated copolymer in the same category as polymer A² except that it has no functional group (i). The content proportions of the respective units such as TFE units and HFE units in polymer C² are the content proportions of the respective units in a case where the content proportion of units (1) is set to be 0 in polymer A².

The second fluorinated copolymer is not limited to the polymer C¹ or polymer C², but various types of heat-melting fluorinated copolymers may be used.

The topcoat layer may, as the case requires and to the extent that the effect of the present invention is not impaired, contain a fluorinated polymer other than polymer A and the second fluorinated copolymer, an aromatic polyester, a polyamide-imide, a thermoplastic polyimide, an aromatic polyether compound, a polyphenylene sulfide, a pigment, carbon fiber, graphite, a metal oxide, a metal halide, etc.

The proportion of the second fluorinated copolymer to the total mass of the topcoat layer is preferably at least 90 mass%, more preferably at least 95 mass%, or may be 100 mass%.

The thickness of the topcoat layer is not particularly limited, but is preferably at least 5 µm, more preferably at least 10 µm, further preferably at least 30 µm.

The total of the thickness of the fluororesin layer and the thickness of the topcoat layer is at least 10 µm.

In a case where the fluororesin layer and topcoat layer are formed by electrostatic coating, the total of the thickness of the fluororesin layer and the thickness of the topcoat layer is preferably at least 50 µm, more preferably at least 100 µm, from the viewpoint of the physical properties such as chemical resistance and electrical characteristics. The upper limit value of the total of the thickness of the fluororesin layer and the thickness of the topcoat layer is preferably 750 µm, more preferably 500 µm, from the viewpoint of shortening the process.

In a case where the fluororesin layer and the topcoat layer are formed by rotolining, the total of the thickness of the fluororesin layer and the thickness of the topcoat layer is preferably at least 100 µm, more preferably at least 500 µm, particularly preferably at least 1,000 µm, from the viewpoint of the physical properties such as chemical resistance and electrical characteristics. The upper limit value of the total of the thickness of the fluororesin layer and the thickness of the topcoat layer is preferably 20 mm, more preferably 10 mm, from the viewpoint of obtaining a good coating film without defects.

In the laminate having a topcoat layer, as it has a topcoat layer containing a second fluorinated copolymer on the fluororesin layer, non-adhesiveness of the resin layer surface improves, and the chemical physical properties such as chemical resistance, etc. will be good.

The laminate having a topcoat layer may be produced by forming a topcoat layer containing a second fluorinated copolymer on the surface of the fluororesin layer formed by the above method.

The topcoat layer is preferably formed by applying a powder coating material containing polymer C¹ or polymer C² to the surface of the fluororesin layer, followed by firing. This allows that in the production of the laminate, the fluororesin layer is formed and then, the topcoat layer can be formed by the same operation continuously. The powder coating method may be any conventionally known powder coating method, and for example, an electrostatic coating method, a fluid dipping method, or rotolining may be applied.

The topcoat layer is preferably formed by the same powder coating method as the fluororesin layer. For example, it is preferred that the fluororesin layer is formed by repeating the operation of electrostatically coating and firing the powder coating material composition of the present invention on the base material one or more times, and then, a topcoat layer is formed by repeating the operation of electrostatically coating and firing a powder coating material containing polymer C¹ or polymer C² on the surface of the fluororesin layer one or more times.

The operation of electrostatically coating and firing a powder coating material containing polymer C¹ or polymer C² is preferably the same as the operation of electrostatically coating and firing the powder coating material composition of the present invention. For example, the powder coating material preferably contains a resin powder containing polymer C¹ or polymer C² and having an average particle size of from 10 to 500 µm. Further, it is preferred that the firing temperature is set to be at least 330°C and less than 400°C, and the total time at the firing temperature is at most 90 minutes.

### EXAMPLES

In the following, the present invention will be described in detail by Examples, but the present invention is not limited to Examples described below, and various modifications are possible as long as the gist of the present invention is not changed.

Ex. 1 to 12 are Examples of the present invention, and Ex. 13 to 18 are Comparative Examples.

### [Measuring methods]

Various measurement methods for fluorinated copolymers and resin powders are shown below.

### (1) Copolymer composition

In the copolymer composition of the fluorinated copolymer, the proportion (mol%) of units based on NAH was obtained by the following infrared absorption spectrum analysis. The proportions of other units were obtained by melt NMR analysis and fluorine content analysis.

### <Proportion (mol%) of units based on NAH>

The fluorinated copolymer was press-formed to obtain a film with a thickness of 200 µm, and then analyzed by infrared spectroscopy to obtain an infrared absorption spectrum. In the infrared absorption spectrum, the absorption peak at the units based on NAH in the fluorinated copolymer appears at 1,778 cm⁻¹. The absorbance of the absorption peak was measured, and using the molar absorption coefficient of NAH being 20,810 mol⁻¹·I·cm⁻¹, the proportion of units based on NAH in the fluorinated copolymer was obtained.

### (2) Melting point (°C)

Using a differential scanning calorimeter (DSC device) manufactured by Seiko Instruments Inc., the melting peak when the fluorinated copolymer was heated at a rate of 10°C/minute, was recorded, whereby the temperature (°C) corresponding to the maximum value was taken as the melting point (Tm).

### (3) MFR (g/10 min)

Using a melt indexer manufactured by Technol Seven Co., Ltd., at 372°C and 49 N load, the mass (g) of the fluorinated copolymer flowing out of a nozzle of 2 mm in diameter and 8 mm in length in 10 minutes (unit time) was measured and taken as MFR.

### (4) Average particle size of fluorinated copolymer

A 2.000 mesh sieve (2.400 mm aperture), a 1.410 mesh sieve (1.705 mm aperture), a 1.000 mesh sieve (1.205 mm aperture), a 0.710 mesh sieve (0.855 mm aperture), a 0.500 mesh sieve (0.605 mm aperture), a 0.250 mesh sieve (0.375 mm aperture), a 0.149 mesh sieve (0.100 mm aperture) and a receiving pan, were stacked in this order from the top to the bottom. A sample (fluorinated copolymer) was put thereon, and sieved by a shaker for 30 minutes. After that, the mass of the sample remaining on each sieve was measured, and the cumulative total of the mass passing through each sieve was plotted on a graph, and the particle size at the time when the cumulative total of the mass passed, was 50%, was taken as the average particle size of the sample.

### (5) Average particle size of resin powder

Using a laser diffraction and scattering particle size analyzer (LA-920 instrument) manufactured by HORIBA, the resin powder was dispersed in water, the particle size distribution was measured, and the average particle size was calculated.

### (6) Loosely packed bulk density and tightly packed bulk density

The loosely packed bulk density and tightly packed bulk density of the resin powder were measured using the method described in [0117] and [0118] of WO2016/017801.

### (7) Peel strength

On the surface on the fluororesin layer side of the laminate in each Ex., incisions were made at intervals of 10 mm by using a cutter knife, and after peeling off a portion of the fluororesin layer, the laminate was fixed to the chuck of a tensile testing machine, and the peel strength (N/cm) was measured when the fluororesin layer was peeled off 90 degrees at a tensile speed of 50 mm/min.

### (8) Appearance evaluation 1 (foaming or cracking)

The surface on the fluororesin layer side of the laminate in each Ex. (or the topcoat layer side surface if a topcoat layer was provided) was visually checked and evaluated in accordance with the following evaluation standards.

### Evaluation standards

○: No foaming or cracking is observed in the fluororesin layer.
×: Foaming or cracking is observed in the fluororesin layer.

### (9) Appearance evaluation 2 (surface smoothness)

The surface on the fluororesin layer side of the laminate in each Ex. (or the topcoat layer side surface if a topcoat layer was provided) was visually checked and evaluated in accordance with the following evaluation standards.

### Evaluation standards

⊚: No surface irregularities can be seen visually, and luster can be seen. Surface irregularities cannot be felt by palpation.
○: A coating film is formed, but surface irregularities can be seen visually and no luster can be seen. Surface irregularities can be felt by palpation.
×: A coating film is not partially formed due to foaming, etc.

### [Resin powder]

### <Powder (a)>

Using NAH (anhydrous hymic acid, manufactured by Hitachi Chemical Co., Ltd.) as a monomer to form units (1) and PPVE (CF₂=CFO(CF₂)₃F, manufactured by AGC Inc.) as a monomer to form PAVE units, polymer A' was produced by the procedure described in [0123] of WO2016/017801. The copolymer composition of polymer A' produced was NAH units/TFE units/PPVE units = 0.1/97.9/2.0 (mol%). The melting point of the produced polymer A' was 300°C, MFR was 17.6 g/10 min., and the average particle size was 1,554 µm.

Then, using the produced polymer A', by the procedure described in [0123] of WO2016/017801, a resin powder (the produced resin powder is hereinafter referred to as "powder (a)") was obtained. The average particle size of powder (a) was 22.08 µm, the loosely packed bulk density was 0.513 g/mL, and the tightly packed bulk density was 0.686 g/mL.

### <Powder (b)>

As a resin powder made of a fluorinated copolymer containing no units (1), a resin powder made of PFA having no functional group (i) (manufactured by Chemours, trade name "MP-102") was prepared. This resin powder is hereinafter referred to as "powder (b)". The average particle size of powder (b) was 14.03 µm, the loosely packed bulk density was 0.8109 g/mL, and the tightly packed bulk density was 1.1351 g/m L.

### [Ex. 1]

The surface of a SUS304 stainless steel sheet of 40 mm (length), 150 mm (width) and 1.2 mm (thickness) was sandblast treated by using 60 mesh alumina particles to obtain a surface roughness Ra of from 5 to 10 µm, and then, the surface was cleaned with ethanol to prepare a base material.

To the powder (a) (100 mass%), 2-mercaptobenzimidazole zinc salt as a heat stabilizer was added in an amount of 0.5 mass% and mixed by a mixer (1,200 rpm, 30 sec.) to obtain a powder coating material composition. An operation of electrostatically applying this powder coating material composition to the surface of the base material and firing it at a firing temperature of 370°C for a firing time of 15 minutes, was repeated four times, to obtain a laminate having a fluororesin layer of 230 µm in thickness formed on the base material.

### [Ex. 2]

A laminate having a fluororesin layer of 228 µm in thickness formed on the base material, was obtained in the same manner as in Ex. 1, except that the heat stabilizer was changed to N,N-dinaphthyl-p-phenylenediamine, and the repeated operation of electrostatic coating and firing was changed to an operation in which the operation of electrostatically coating the powder coating material composition and firing it at a firing temperature of 380°C for a firing time of 10 minutes, was repeated four times.

### [Ex. 3]

A laminate having a fluororesin layer of 259 µm in thickness formed on the base material, was obtained in the same manner as in Ex. 1, except that the heat stabilizer was changed to N,N-dinaphthyl-p-phenylenediamine.

### [Ex. 4]

A laminate having a fluororesin layer of 203 µm in thickness formed on the base material, was obtained in the same manner as in Ex. 1, except that the heat stabilizer was changed to 0.5 mass% of decaphenylcyclopentasilane, and the repeated operation of electrostatic coating and firing was changed to an operation in which the operation of electrostatically coating the powder coating material composition and firing it at a firing temperature of 350°C for a firing time of 10 minutes, was repeated six times.

### [Ex. 5]

A laminate having a fluororesin layer of 402 µm in thickness formed on the base material, was obtained in the same manner as in Ex. 1, except that the heat stabilizer was changed to 2.0 mass% of polyphenylene sulfide powder, and the repeated operation of electrostatic coating and firing was changed to an operation in which the operation of electrostatically coating the powder coating material composition and firing it at a firing temperature of 360°C for a firing time of 10 minutes, was repeated six times.

### [Ex. 6]

A laminate having a fluororesin layer of 232 µm in thickness formed on the base material, was obtained in the same manner as in Ex. 1, except that the heat stabilizer was changed to 13.0 mass% of polyetheretherketone powder, and the repeated operation of electrostatic coating and firing was changed to an operation in which the operation of electrostatically coating the powder coating material composition and firing it at a firing temperature of 360°C for a firing time of 15 minutes, was repeated four times.

### [Ex. 7]

A laminate having a fluororesin layer and a topcoat layer formed in this order on a base material, wherein the total of the thickness of the fluororesin layer and the thickness of the topcoat layer was 279 µm, was obtained in the same manner as in Ex. 1, except that the heat stabilizer was changed to 13.0 mass% of polyetheretherketone powder, the powder coating material composition was electrostatically coated and fired once at a firing temperature of 360°C for a firing time of 15 minutes, and then, an operation of electrostatically coating, as a powder coating material for forming a topcoat layer, a powder coating material consisting of powder (b) on the surface and firing it at a firing temperature of 360°C for a firing time of 15 minutes, was repeated three times.

### [Ex. 8]

A laminate having a fluororesin layer of 293 µm in thickness formed on a base material was obtained in the same manner as in Ex. 1, except that the heat stabilizer was changed to 13.0 mass% of polyetherketoneketone powder, and the repeated operation of electrostatic coating and firing was changed to an operation in which the operation of electrostatically coating the powder coating material composition and firing it at a firing temperature of 350°C for a firing time of 15 minutes, was repeated four times.

### [Ex. 9]

A laminate having a fluororesin layer and a topcoat layer formed in this order on a base material, wherein the total of the thickness of the fluororesin layer and the thickness of the topcoat layer was 275 µm, was obtained in the same manner as in Ex. 1, except that the heat stabilizer was changed to 20.0 mass% of polyetherketoneketone powder, the powder coating material composition was electrostatically coated and fired once at a firing temperature of 350°C for a firing time of 15 minutes, and then, an operation of electrostatically coating, as a powder coating material for forming a topcoat layer, a powder coating material consisting of powder (b) on the surface and firing it at a firing temperature of 360°C for a firing time of 15 minutes, was repeated three times.

### [Ex. 10]

A laminate having a fluororesin layer of 206 µm in thickness formed on a base material, was obtained in the same manner as in Ex. 1, except that the heat stabilizer was changed to 13.0 mass% of polyethersulfone powder, and the repeated operation of electrostatic coating and firing was changed to an operation in which the operation of electrostatically coating the powder coating material and firing it at a firing temperature of 360°C for a firing time of 15 minutes, was repeated four times.

### [Ex. 11]

A laminate having a fluororesin layer and a topcoat layer formed in this order on a base material, wherein the total of the thickness of the fluororesin layer and the thickness of the topcoat layer was 287 µm, was obtained in the same manner as in Ex. 1, except that the heat stabilizer was changed to 13.0 mass% of polyethersulfone powder, the powder coating material composition was electrostatically coated and fired once at a firing temperature of 360°C for a firing time of 15 minutes, and then, an operation of electrostatically coating, as a powder coating material for a topcoat layer, a powder coating material consisting of powder (b) and firing it at a firing temperature of 360°C for a firing time of 15 minutes, was repeated three times.

### [Ex. 12]

A laminate having a fluororesin layer of 330 µm in thickness formed on a base material was obtained in the same manner as in Ex. 1, except that the heat stabilizer was changed to 13.0 mass% of polyetherimide powder, and the repeated operation of electrostatic coating and firing was changed to an operation in which the operation of electrostatically coating the powder coating material composition and firing it at a firing temperature of 360°C for a firing time of 15 minutes, was repeated four times.

### [Ex. 13]

A laminate having a fluororesin layer formed on a base material was obtained in the same manner as in Ex. 1, except that the heat stabilizer was not added, and the repeated operation of electrostatic coating and firing was changed to an operation in which the operation of electrostatically coating the powder coating material composition and firing it at a firing temperature of 380°C for a firing time of 10 minutes, was repeated four times. Foaming was observed in the fluororesin layer of the obtained laminate, and the film thickness and peel strength could not be measured.

### [Ex. 14]

A laminate having a fluororesin layer of 282 µm in thickness formed on a base material was obtained in the same manner as in Ex. 1, except that the heat stabilizer was not added, and the repeated operation of electrostatic coating and firing was changed to an operation in which the operation of electrostatically coating the powder coating material and firing it at a firing temperature of 370°C for a firing time of 3 minutes, was repeated six times.

### [Ex. 15]

A laminate having a fluororesin layer of 321 µm in thickness formed on a base material was obtained in the same manner as in Ex. 1, except that the heat stabilizer was not added, and the repeated operation of electrostatic coating and firing was changed to an operation in which the operation of electrostatically coating the powder coating material and firing it at a firing temperature of 340°C for a firing time of 10 minutes, was repeated six times.

### [Ex. 16]

A laminate having a fluororesin layer of 139 µm in thickness formed on a base material was obtained in the same manner as in Ex. 1, except that powder (b) was used instead of powder (a), the heat stabilizer was not added, and the repeated operation of electrostatic coating and firing was changed to an operation in which the operation of electrostatically coating the powder coating material composition and firing it at a firing temperature of 360°C for a firing time of 10 minutes, was repeated six times.

### [Ex. 17]

A laminate having a fluororesin layer of 330 µm in thickness formed on a base material was obtained in the same manner as in Ex. 1, except that powder (b) was used instead of powder (a), the heat stabilizer was changed to 20.0 mass% of polyetheretherketone, and the repeated operation of electrostatic coating and firing was changed to an operation in which the operation of electrostatically coating the powder coating material and firing it at a firing temperature of 350°C for a firing time of 10 minutes, was repeated four times.

### [Ex. 18]

A laminate having a fluororesin layer of 201 µm in thickness formed on a base material was obtained in the same manner as in Ex. 1, except that powder (b) was used instead of powder (a), the heat stabilizer was changed to 0.5 mass% of decaphenylcyclopentasilane, and the repeated operation of electrostatic coating and firing was changed to an operation in which the operation of electrostatically coating the powder coating material and firing it at a firing temperature of 370°C for a firing time of 15 minutes, was repeated four times.

The powder coating material compositions used in the respective Ex., and the production conditions and evaluation results of the laminates in the respective Ex., are shown in Tables 1 and 2. In Tables 1 and 2, the number of firing and total time are the total of those for forming the fluororesin layer and those for forming the topcoat layer.

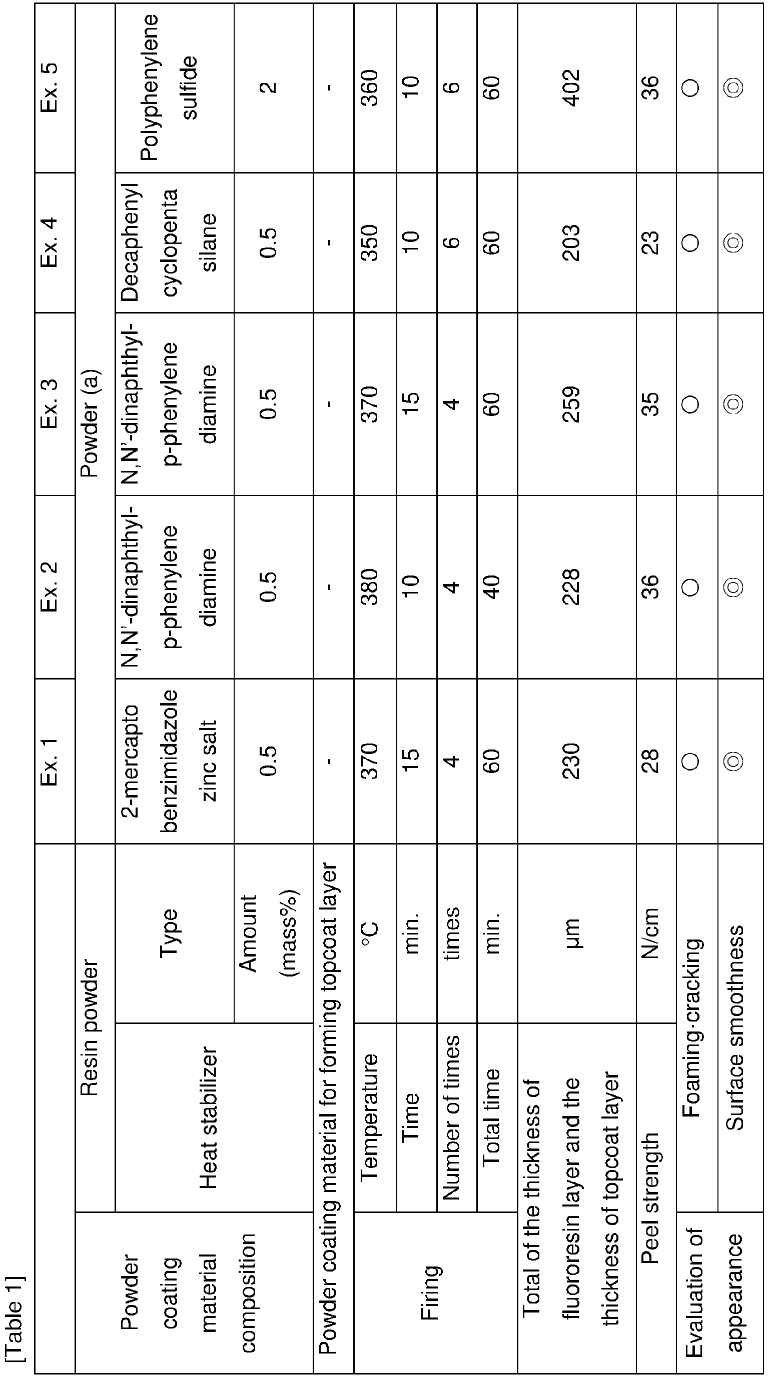

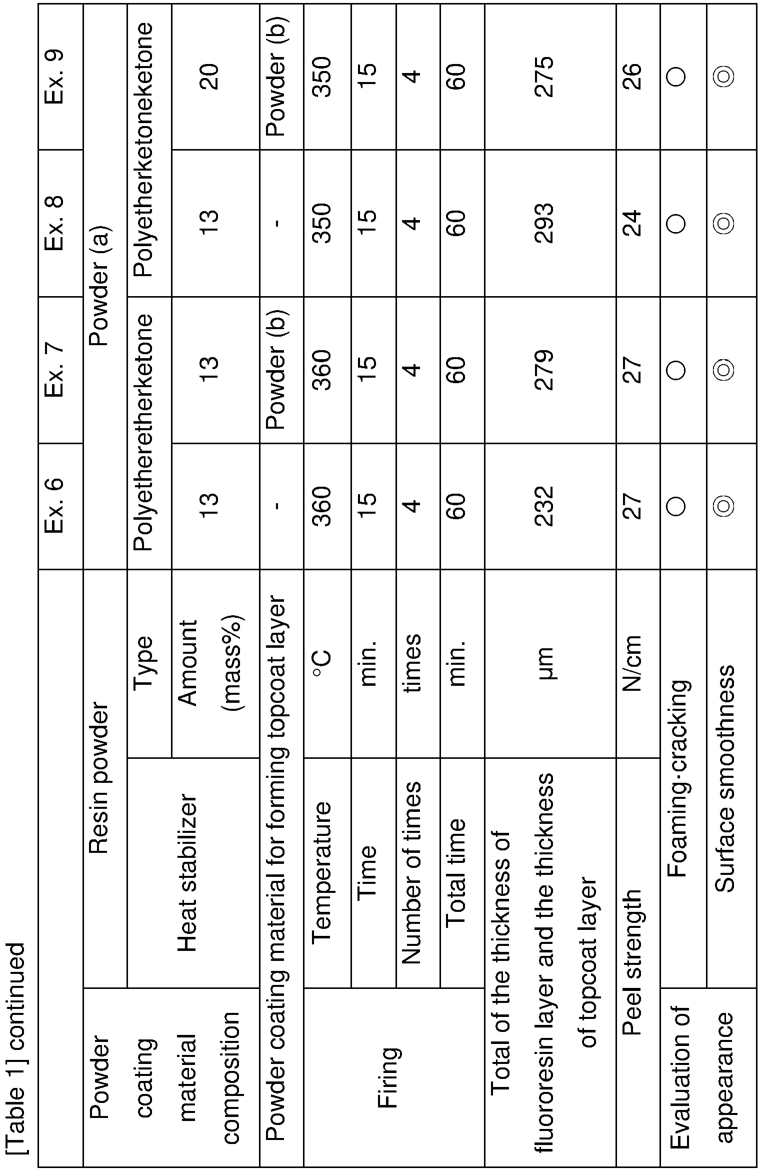

**[Table 2]**

| | | | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|---|---|
| Powder coating material composition | Resin powder | | Powder (a) | | | | | | Powder (b) | | |
| | Heat stabilizer | Type | Polyether sulfone | | Polyether imide | Nil | Nil | Nil | Nil | Polyether ether ketone | Decaphenyl cyclopenta silane |
| | | Amount (mass%) | 13 | 13 | 13 | - | - | - | - | 20 | 0.5 |
| Powder coating material for forming topcoat layer | | | - | Powder (b) | - | - | - | - | - | - | - |
| Firing | Temperature | °C | 360 | 360 | 360 | 380 | 370 | 340 | 360 | 350 | 370 |
| | Time | min. | 15 | 15 | 15 | 10 | 3 | 10 | 10 | 10 | 15 |
| | Number of times | times | 4 | 4 | 4 | 4 | 6 | 6 | 6 | 4 | 4 |
| | Total time | min. | 60 | 60 | 60 | 40 | 18 | 60 | 60 | 40 | 60 |
| Total of the thickness of fluororesin layer and the thickness of topcoat layer | | µm | 206 | 287 | 330 | Not measurable | 282 | 321 | 139 | 330 | 201 |
| Peel strength | | N/cm | 31 | 26 | 27 | Not measurable | 15 | 14 | 4 | 5 | 5 |
| Evaluation of appearance | Foaming-cracking | | ○ | ○ | ○ | × | ○ | ○ | ○ | ○ | ○ |
| | Surface smoothness | | ⊚ | ⊚ | ⊚ | × | ○ | ○ | ⊚ | ⊚ | ⊚ |

The laminates in Ex. 1 to 12 were excellent in adhesion between the base material and the fluororesin layer. No foaming or cracking was observed in the fluororesin layer, and the surface smoothness of the fluororesin layer was good, resulting in an excellent appearance.

On the other hand, in Ex. 13, where the powder coating material composition did not contain a heat stabilizer, foaming was observed in the fluororesin layer at a firing temperature of 380°C.

In Ex. 14 and 15, where the firing temperature was lower than in Ex. 13, the appearance of the fluororesin layer was good, but the adhesion between the base material and the fluororesin layer was inferior to that in Ex. 1 to 12.

In Ex. 16, where the resin powder did not have functional group (i) and the powder coating material composition did not contain a heat stabilizer, the adhesion between the base material and the fluororesin layer was worse than in Ex 14 and 15.

In Ex. 17 and 18, where a heat stabilizer was added to the powder coating material composition in Ex. 16, the adhesion between the base material and the fluororesin layer was equivalent to that in Ex. 16.

The entire disclosure of Japanese Patent Application No. 2020-106884 filed on June 22, 2020 including specification, claims, drawings and summary is incorporated herein by reference in its entirety.

## Claims

1. A powder coating material composition comprising a resin powder with an average particle size of from 10 to 800 µm containing the following polymer A, and the following heat stabilizer B, wherein the proportion of the heat stabilizer B to 100 parts by mass of the polymer A is from 0.01 to 30 parts by mass,
Polymer A: A fluorinated copolymer which is a tetrafluoroethylene/perfluoro(alkyl vinyl ether) copolymer having at least one type of functional group selected from the group consisting of a carbonyl group-containing group, a hydroxy group, an epoxy group and an isocyanate group, or a tetrafluoroethylene/hexafluoropropylene copolymer having the functional group, and which has a melting point of from 260 to 320°C,
Heat stabilizer B: A heat stabilizer selected from the group consisting of an aromatic polyether compound, an aromatic amine compound, an aromatic sulfur compound and a polysilane compound.

2. The powder coating material composition according to Claim 1, wherein the total content of the polymer A and the heat stabilizer B is at least 90 mass% to the powder coating material composition.

3. The powder coating material composition according to Claim 1 or 2, wherein the polymer A is the fluorinated copolymer having a carbonyl group-containing group, and the heat stabilizer B is a heat stabilizer selected from the group consisting of an aromatic polyether compound, an aromatic amine compound and an aromatic sulfur compound.

4. A method for producing a laminate comprising a base material and a fluororesin layer formed on the surface of the base material, which comprises forming a layer of the powder coating material composition as defined in any one of Claims 1 to 3 on the surface of the base material, and then firing the layer of the powder coating material composition to form the fluororesin layer.

5. The production method according to Claim 4, wherein the temperature for the firing is from 330 to 400°C.

6. The production method according to Claim 4 or 5, wherein the thickness of the fluororesin layer formed on the surface of the base material is at least 5 µm.

7. The production method according to any one of Claims 4 to 6, wherein the material of the surface of the base material on which the fluororesin layer is formed is a metal.

8. The production method according to Claim 7, wherein the metal is stainless steel.

9. The production method according to any one of Claims 4 to 8, wherein a topcoat layer containing a fluorinated copolymer different from the polymer A is further formed on the surface of the fluororesin layer formed, to produce a laminate having a topcoat layer on the surface of the fluororesin layer.

10. The production method according to Claim 9, wherein the topcoat layer is formed by applying a powder coating material containing a tetrafluoroethylene/perfluoro(alkyl vinyl ether) copolymer not having the functional group or a tetrafluoroethylene/hexafluoropropylene copolymer not having the functional group to the surface of the fluororesin layer, followed by firing.

11. A laminate comprising a base material and a fluororesin layer formed on the surface of the base material, wherein
the fluororesin layer is a fluororesin layer formed from the powder coating material composition as defined in any one of Claims 1 to 3,
the thickness of the fluororesin layer is at least 5 µm, and
the peel strength between the base material and the fluororesin layer is at least 20 N/cm.

12. The laminate according to Claim 11, which further has a topcoat layer formed on the fluororesin layer, wherein
the topcoat layer contains a fluorinated copolymer different from the polymer A, and
the total of the thickness of the fluororesin layer and the thickness of the topcoat layer is at least 10 µm.

13. The laminate according to Claim 12, wherein the fluorinated copolymer different from the polymer A is a tetrafluoroethylene/perfluoro(alkyl vinyl ether) copolymer not having the functional group, or a tetrafluoroethylene/hexafluoropropylene copolymer not having the functional group.

14. The production method according to any one of Claims 11 to 13, wherein the material of the surface of the base material in contact with the fluororesin layer is a metal.

15. The laminate according to Claim 14, wherein the metal is stainless steel.
